(19) Europäisches Patentamt
European Patent Office
Office européen des brevets

(11) **EP 3 213 144 B1**

(12) **FASCICULE DE BREVET EUROPEEN**

(45) Date de publication et mention de la délivrance du brevet:
**17.04.2024 Bulletin 2024/16**

(21) Numéro de dépôt: **14811949.8**

(22) Date de dépôt: **31.10.2014**

(51) Classification Internationale des Brevets (IPC):
***G02C 7/02*** *(2006.01)*

(52) Classification Coopérative des Brevets (CPC):
**G02C 7/024**

(86) Numéro de dépôt international:
**PCT/FR2014/052783**

(87) Numéro de publication internationale:
**WO 2016/066909 (06.05.2016 Gazette 2016/18)**

(54) **PROCEDE DE CONCEPTION OPTIQUE D'UNE PAIRE DE LENTILLES OPHTALMIQUES ET PAIRE DE LENTILLES OPHTALMIQUES AINSI OBTENUE**

VERFAHREN ZUR OPTISCHEN GESTALTUNG EINES OPHTHALMISCHEN LINSENPAARES UND SO ERHALTENES OPHTHALMISCHES LINSENPAAR

METHOD FOR OPTICAL DESIGN OF A PAIR OF OPHTHALMIC LENSES AND PAIR OF OPHTHALMIC LENSES THUS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.09.2017 Bulletin 2017/36**

(73) Titulaire: **Essilor International**
**94220 Charenton-le-Pont (FR)**

(72) Inventeurs:
• **HERNANDEZ-CASTANEDA, Martha**
**94227 Charleton-Le-Pont Cedex (FR)**
• **HESLOUIS, Mélanie**
**94227 Charleton-Le-Pont Cedex (FR)**
• **MARIE, Sarah**
**94227 Charleton-Le-Pont Cedex (FR)**
• **MARIN, Gildas**
**94227 Charleton-Le-Pont Cedex (FR)**

(74) Mandataire: **Jacobacci Coralis Harle**
**32, rue de l'Arcade**
**75008 Paris (FR)**

(56) Documents cités:
**EP-A1- 2 208 457          WO-A1-2009/072528**
**DE-A1-102007 062 929    DE-A1-102011 009 473**
**US-A1- 2008 100 800      US-B2- 8 807 746**

**Description**

DOMAINE TECHNIQUE AUQUEL SE RAPPORTE L'INVENTION

La présente invention concerne de manière générale le domaine de la conception des lentilles ophtalmiques pour la correction des défauts de réfraction sphérique et cylindrique des deux yeux d'un porteur.

Elle concerne plus particulièrement un procédé d'obtention d'une paire de telles lentilles ophtalmiques.

ARRIERE-PLAN TECHNOLOGIQUE

La conception des lentilles ophtalmiques destinées à être montées dans une monture de lunettes pour la correction des défauts de vision d'un porteur revêt une importance particulière dans la mesure où elle conditionne pour une grande partie la bonne acceptation de cette paire de lunettes.

Cette conception est en particulier critique lorsqu'elle concerne des lentilles multifocales ou progressives, et des lentilles destinées à compenser l'astigmatisme du porteur.

De manière connue, la conception optique d'une paire de lentilles ophtalmiques pour la correction des défauts de réfraction sphérique et cylindrique des deux yeux d'un porteur comprend :

- une étape de définition des besoins de correction sphérique et cylindrique du porteur pour différentes proximités de vision, et
- une étape de détermination des puissances sphériques et cylindriques desdites lentilles ophtalmiques en des points de vision de différentes proximités, en fonction des besoins de correction sphérique et cylindrique du porteur précédemment définis.

La première étape peut être réalisée par l'ophtalmologue qui délivre une prescription optique au porteur, cette prescription comprenant pour chaque proximité, par exemple pour la vision de loin, la vision intermédiaire et/ou la vision de près :

- une valeur de sphère en dioptries pour la correction des amétropies sphériques, telles que la myopie ou l'hypermétropie en vision de loin,
- une valeur de cylindre avec la donnée de son module en dioptries et la donnée de son axe en degrés, ce cylindre ayant pour but de corriger l'astigmatisme éventuel du porteur aux différentes proximités.

Avec une telle prescription différenciée (oeil droit/oeil gauche et vision de loin/vision de près), la seconde étape pourrait dans certains cas conduire, sans traitement spécifique, à des puissances sphériques et cylindriques disparates, ce qui peut provoquer un inconfort pour le porteur.

Un tel procédé est décrit dans le brevet DE10 2007 062929.

OBJET DE L'INVENTION

Dans ce contexte, on propose selon l'invention un procédé d'obtention d'une paire de lentilles ophtalmiques selon la revendication 1 annexée.

On obtient ainsi un bon équilibrage binoculaire et le porteur peut ainsi bénéficier des avantages de la prescription différenciée sans subir d'inconfort.

D'autres caractéristiques non limitatives et avantageuses du procédé de conception optique conforme à l'invention sont les suivantes :

- l'écart obtenu sur l'une et/ou l'autre desdites grandeurs est inférieur à une valeur seuil prédéfinie ;
- l'écart obtenu entre les deux lentilles ophtalmiques de la paire sur l'addition de puissance sphérique équivalente entre les points de vision de différentes proximités est inférieur à 0,25 dioptrie ;
- l'écart entre les deux lentilles ophtalmiques de la paire sur l'addition de puissance sphérique équivalente entre les points de vision de différentes proximités est inférieur à 0,125 dioptrie ;
- la détermination des puissances d'au moins une des deux lentilles ophtalmiques est réalisée en appliquant les règles suivantes :

  - l'une des deux lentilles ophtalmiques de la paire présentant une variation du vecteur de puissance cylindrique minimale et inférieure à 0,15 dioptrie, la variation du vecteur de puissance cylindrique de l'autre lentille ophtalmique de la paire est inférieure à 0,3 dioptries, ou

- l'une des deux lentilles ophtalmiques de la paire présentant une variation du vecteur de puissance cylindrique minimale et supérieure ou égale à 0,15 dioptrie, la variation du vecteur de puissance cylindrique de l'autre lentille ophtalmique de la paire est inférieure au double de cette variation du vecteur de puissance cylindrique minimale ;

- l'écart sur la variation du vecteur de puissance cylindrique entre les points de vision de différentes proximités est obtenu par modification de l'amplitude et/ou de l'angle du vecteur de puissance cylindrique de l'une des deux lentilles ophtalmiques de la paire en un point de vision de près ;
- la détermination des puissances d'au moins une des deux lentilles est également réalisée de manière à limiter la différence obtenue, pour les deux lentilles ophtalmiques de la paire, entre l'addition de puissance sphérique équivalente et le besoin d'addition ;
- la différence obtenue entre l'addition de puissance sphérique équivalente et le besoin d'addition est inférieure à 0,25 dioptries ;
- la détermination des puissances sphérique et cylindrique de ladite au moins une des deux lentilles ophtalmiques en des points de vision de différentes proximités est réalisée avec un pas de 0,125 dioptrie ;
- l'étape de détermination est réalisée de manière à ce que les puissances sphérique et cylindrique, aux points de vision des différentes proximités, de la lentille ophtalmique destinée à être placée devant l'œil dominant du porteur correspondent aux besoins de correction sphérique et cylindrique auxdits points de vision du porteur ;
- lesdits points de vision de différentes proximités correspondent à des points de vision de loin, de vision intermédiaire et/ou de vision de près du porteur ;
- lesdits points de vision de différentes proximités correspondent à des points de vision de loin et de vision de près du porteur, et les besoins de correction sphérique et cylindrique du porteur sont définis à partir d'une mesure de la réfraction sphérique et cylindrique en vision de loin et en vision de près des deux yeux du porteur ;
- lesdits points de vision de différentes proximités correspondent à des points de vision de loin et de vision de près du porteur, et les besoins de correction sphérique et cylindrique du porteur sont définis à partir d'une mesure de la réfraction sphérique et cylindrique en vision de loin des deux yeux du porteur et d'une mesure de la réfraction sphérique et cylindrique en vision de près d'au moins un oeil du porteur ;
- ladite mesure de la réfraction sphérique et cylindrique en vision de près est réalisée sur l'œil dominant du porteur.

L'étape de définition des besoins peut par ailleurs comprendre une sous-étape de définition des besoins de correction cylindrique du porteur pour différentes proximités de vision réalisée après une étape de limitation de l'écart obtenu, entre les deux lentilles ophtalmiques de la paire, sur l'addition de puissance sphérique équivalente.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 est un logigramme présentant les étapes principales visant à l'obtention de lentilles ophtalmiques dans le cadre de la présente invention ;
- la figure 2 représente un premier exemple de procédé de détermination des puissances prescrites conforme à l'invention ;
- la figure 3 représente un second exemple de procédé de détermination des puissances prescrites conforme à l'invention ;
- la figure 4 représente schématiquement un exemple de procédé de réalisation d'une lentille ophtalmique sur la base de puissances prescrites.

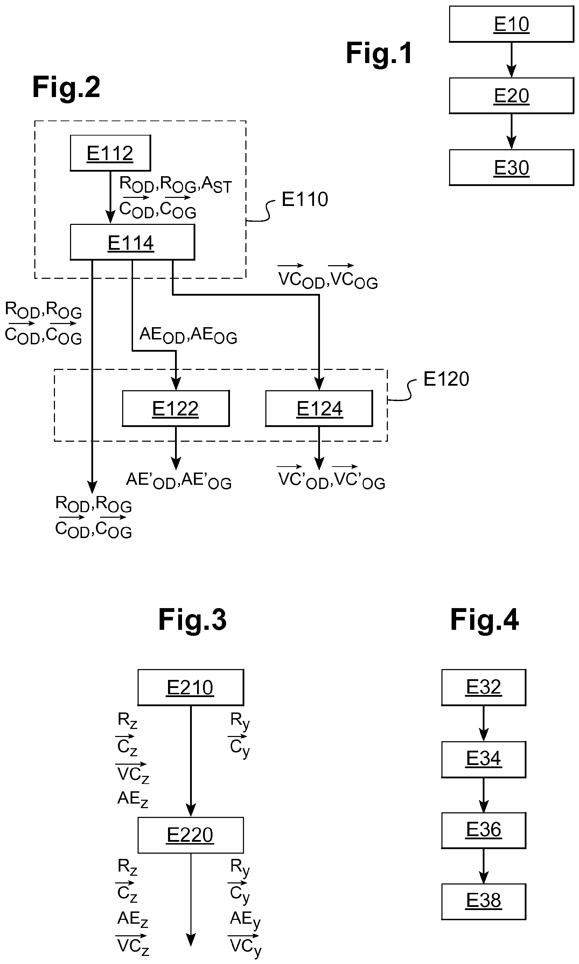

La figure 1 présente les étapes principales mises en oeuvre en vue d'obtenir des lentilles ophtalmiques conçues conformément à l'invention.
Ce procédé débute par une étape E10 de définition des besoins de correction sphérique et cylindrique d'un porteur pour au moins deux proximités de vision, ici en vision de loin et en vision de près. On pourrait en variante définir les besoins de correction du porteur pour au moins une autre proximité de vision, par exemple la vision intermédiaire.
Deux exemples envisageables pour la mise en oeuvre de cette étape E10 sont décrits ci-dessous en référence respectivement aux figures 2 (étape E110) et 3 (étape E210).
Les besoins en correction du porteur sont par exemple exprimés comme suit, pour au moins un oeil (noté X ci-dessous, qui peut être l'œil droit OD ou l'œil gauche OG) :

- une valeur de puissance sphérique $R_X$ visant à corriger un défaut de réfraction sphérique en vision de loin (déterminée en général pour chaque oeil) ;
- un vecteur de puissance cylindrique $\overrightarrow{C_X}$ représentant le module et l'angle de la correction cylindrique visant à corriger un défaut de réfraction cylindrique (astigmatisme) en vision de loin (déterminée en général pour chaque œil) ;
- l'addition de puissance sphérique équivalente $AE_X$ pour une autre proximité de vision (ici la vision de près) que la vision de loin, qui représente la différence entre la valeur de puissance sphérique équivalente pour l'autre proximité de vision (ici la vision de près) et la valeur de puissance sphérique équivalente $R_{eq}$ pour la vision de loin ;
- la variation (vectorielle) $\overrightarrow{VC_X}$ du vecteur de puissance cylindrique pour une autre proximité de vision (ici la vision de près) que la vision de loin, qui représente la différence vectorielle entre le vecteur $\overrightarrow{C_X^{VP}}$ représentant la correction cylindrique pour l'autre proximité de vision (ici la vision de près) et le vecteur $\overrightarrow{C_X}$ représentant la correction cylindrique en vision de loin.

Autrement dit, on a la relation vectorielle suivante : $\overrightarrow{C_X^{VP}} = \overrightarrow{C_X} + \overrightarrow{VC_X}$.

La puissance sphérique équivalente (ou moyenne) est égale à la somme de la puissance sphérique et de la moitié du module du vecteur de puissance cylindrique ; pour la vision de loin : $R_{eq} = R_X + \|\overrightarrow{C_X}\|/2$.

Le procédé se poursuit par une étape E20 de détermination des puissances sphériques et cylindriques de deux lentilles ophtalmiques (chaque lentille ophtalmique étant destinée à être placée devant un oeil du porteur) en des points de vision de différentes proximités, ici en vision de près et en vision de loin, en fonction des besoins définis à l'étape E10.

Des puissances sphériques et cylindriques pourraient être déterminées pour des points correspondant à au moins une autre proximité de vision (par exemple la vision intermédiaire) en utilisant les besoins définis pour cette autre proximité de vision dans la variante déjà mentionnée.

Pour au moins une des deux lentilles ophtalmiques, les puissances sphériques et cylindriques sont déterminées à l'étape E20 notamment de manière à limiter l'écart entre l'addition de puissance sphérique équivalente pour l'œil droit $AE_{OD}$ et l'addition de puissance sphérique équivalente pour l'œil gauche $AE_{OG}$, et/ou de manière à limiter l'écart entre la variation du vecteur de puissance cylindrique pour l'œil droit $\overrightarrow{VC_{OD}}$ et la variation du vecteur de puissance cylindrique pour l'œil gauche $\overrightarrow{VC_{OG}}$.

Deux exemples envisageables pour la mise en oeuvre de cette étape E20 sont décrits ci-dessous en référence respectivement aux figures 2 (étape E120) et 3 (étape E220).

L'étape E20 est suivie d'une étape E30 de réalisation des lentilles ophtalmiques sur la base des puissances sphériques et cylindriques déterminées à l'étape E20.

Comme cela ressortira de l'exemple de mise en oeuvre de cette étape donné ci-dessous pour une lentille en référence à la figure 4, l'étape E30 comprend pour l'essentiel la définition d'au moins une surface optique de la lentille concernée (cette surface permettant d'obtenir les puissances sphériques et cylindriques déterminées à l'étape E20) et la fabrication d'une lentille ophtalmique présentant une telle surface optique.

La figure 2 représente un premier exemple de procédé de détermination des puissances prescrites conforme à l'invention.

Un tel procédé comprend une première étape E110 de définition des besoins de correction sphérique et cylindrique du porteur (qui correspond à l'étape E10 décrite ci-dessus) et une seconde étape E120 de détermination des puissances sphériques et cylindriques pour deux lentilles ophtalmiques destinées à être placées devant les yeux du porteur (l'étape E120 correspondant à l'étape E20 décrite ci-dessus).

La première étape E110 débute par une sous-étape E112 de prescription de certaines valeurs de correction par un optométriste :

- des valeurs de correction en vision de loin (notamment, pour chaque oeil X, une valeur de puissance sphérique $R_X$ et un vecteur de puissance cylindrique $\overrightarrow{C_X}$), généralement basées sur des mesures effectuées par l'optométriste sur le porteur (réfraction monoculaire, correction d'astigmatisme, équilibre bioculaire, appréciation perceptuelle), sur des plaintes et les besoins visuels du porteur et sur la vision binoculaire ;
- une valeur d'addition standard $A_{ST}$ (relative à une autre proximité de vision, ici la vision de près), qui tient généralement compte de l'âge du porteur, de sa distance de travail et de sa capacité d'accommodation, et qui est utilisée pour les deux yeux (la puissance sphérique positive pour cette addition standard étant ajoutée symétriquement sur les deux yeux).

La première étape E112 est suivie d'une sous-étape E114 de mesure de la réfraction subjective pour cette autre proximité de vision (ici la vision de près), à l'aide d'un outil adapté à ce type de mesure, par exemple une tête de réfraction ou des lunettes d'essai.

Grâce à un tel outil, on mesure à l'étape E114 la réfraction monoculaire de chaque oeil à la distance d'observation voulue (axe de regard et proximité souhaitée, ici vision de près) : puissance sphérique, axe de cylindre, puissance cylindrique, puis éventuellement vérification de la puissance sphérique.

On peut alors procéder à un équilibrage des puissances sphériques entre les deux yeux (équilibre binoculaire) afin d'égaliser l'accommodation mise en jeu lors de la réfraction monoculaire ; en effet, les deux yeux sont généralement testés à des moments différents et il est possible que le couple oculaire n'ait pas eu le même degré de relâchement accommodatif pendant l'examen de l'un ou l'autre oeil.

Différentes méthodes d'équilibrage de la puissance sphérique peuvent être utilisées (prismes verticaux, filtres polarisés, occlusion alternée, septum). Avec chaque méthode de dissociation, l'état accommodatif des deux yeux peut être comparé selon l'une des méthodes suivantes : méthode des optotypes, flou des images, équilibre sur duochrome.

La sous-étape E114 inclut éventuellement en outre une mesure de la performance visuelle (par exemple une mesure de l'acuité visuelle monoculaire et/ou binoculaire) avant et après cette mesure de réfraction monoculaire en vision de près (par exemple avec des lunettes d'essai apportant une correction correspondant aux puissances mesurées) afin de s'assurer que la prise en compte de la réfraction monoculaire améliore la performance visuelle.

La sous-étape E114 permet donc d'obtenir, pour chaque oeil X, l'addition de puissance sphérique équivalente $AE_X$ pour l'autre proximité de vision (ici la vision de près) et la variation $\overrightarrow{VC_X}$ du vecteur de puissance cylindrique pour l'autre proximité de vision (ici la vision de près).

Selon une variante envisageable pour l'étape E114, seule la correction de puissance cylindrique est mesurée pour l'autre proximité de vision (ici la vision de près) de sorte que l'étape E114 permet seulement de définir, pour chaque oeil X, la variation $\overrightarrow{VC_X}$ du vecteur de puissance cylindrique pour l'autre proximité de vision (ici la vision de près). Pour chaque oeil X, l'addition de puissance sphérique équivalente $AE_X$ pour l'autre proximité de vision (ici la vision de près) est en revanche déterminée sur la base de l'addition standard $A_{ST}$ fixée par l'optométriste à l'étape E112, en y ajoutant toutefois 0,125 dioptries de puissance sphérique pour toute modification de puissance cylindrique de module 0,25 dioptries afin de maintenir la correction sphérique équivalente.

Selon d'autres modes de réalisation envisageable pour l'étape E110 :

- l'ensemble des données (besoins de correction sphérique et cylindrique) pour les différentes proximités de vision (vision de loin et vision de près dans l'exemple décrit ici) sont recueillies de manière objective à l'aide d'un aberromètre ou d'un auto-refractomètre ;
- l'ensemble des données (besoins de correction sphérique et cylindrique) pour les différentes proximités de vision (vision de loin et vision de près dans l'exemple décrit ici) sont recueillies de manière subjective par un optométriste ;
- les besoins de correction sphérique et cylindrique pour la vision de loin sont déterminés, de manière subjective, par un optométriste et les besoins de correction sphérique et cylindrique pour une autre proximité de vision (ici la vision de près) sont déterminés, de manière objective, par un aberromètre ou un auto-refractomètre ;
- les besoins de correction sphérique et cylindrique pour la vision de loin sont déterminés de manière subjective par un optométriste et ceux relatifs à une autre proximité de vision (ici la vision de près) sont déterminés par l'ajout, à la prescription en vision de loin subjective, de l'écart mesuré de manière objective entre vision de loin et vision de près à l'aide d'un aberromètre ou d'un auto-refractomètre.

Une fois les besoins de correction sphérique et cylindrique définis (étape E110 formée par exemple des sous-étapes E112 et E114), on procède à l'étape E120 de détermination des puissances sphériques et cylindriques pour les deux lentilles ophtalmiques.

Dans l'exemple décrit ici, on utilise directement les besoins de correction sphérique et cylindrique en vision de loin (c'est-à-dire les valeurs de puissance sphérique $R_{OD}$, $R_{OG}$ et les vecteurs de puissance cylindrique $\overrightarrow{C_{OD}}$, $\overrightarrow{C_{OG}}$ déterminés à l'étape E112) en tant que puissances sphériques et cylindriques sur les zones de lentilles ophtalmiques qui correspondent à la vision de loin.

On traite en revanche les deux valeurs d'addition de puissance sphérique équivalente $AE_{OD}$, $AE_{OG}$, obtenues respectivement pour l'œil droit et l'œil gauche à l'étape E114, au moyen d'une sous-étape E122 de limitation de l'écart entre ces deux valeurs (cet écart pouvant s'écrire comme la valeur absolue de la différence entre les deux valeurs : $|AE_{OD} - AE_{OG}|$).

Si cet écart est (strictement) supérieur à un seuil prédéfini (par exemple 0,325 dioptrie ou 0,25 dioptrie, voire 0,125 dioptrie), on modifie au moyen de l'étape E122 au moins une des deux valeurs d'addition de puissance sphérique équivalente $AE_{OD}$, $AE_{OG}$ de sorte que l'écart (en tenant compte de la valeur modifiée) soit inférieur ou égal au seuil prédéfini, voire nul.

On peut éventuellement prendre en compte, lors de la modification de valeur d'addition de puissance sphérique équivalente de l'étape E122, la valeur d'addition standard $A_{ST}$ déterminée à l'étape E112, par exemple en modifiant lors de l'étape E122 la valeur d'addition de puissance sphérique la plus éloignée de la valeur d'addition standard $A_{ST}$.

Ainsi, par exemple, si les besoins définis à l'étape E110 sont les suivants : $A_{ST}$ = 2,25 dioptrie, $AE_{OD}$ = 2,5 dioptrie, $AE_{OG}$ = 2,75 dioptrie, on modifie la valeur d'addition de puissance sphérique équivalente pour l'œil gauche $AE_{OG}$ (la plus éloignée de la valeur d'addition standard $A_{ST}$) de manière à réduire l'écart entre $AE_{OD}$ et $AE_{OG}$, en prenant par exemple comme valeur modifiée d'addition de puissance sphérique équivalente pour l'œil gauche $AE'_{OG}$ = 2,5 dioptrie.

Les valeurs $AE'_{OG}$, $AE'_{OD}$ d'addition de puissance sphérique équivalente après traitement par l'étape E122 (c'est-à-dire éventuellement modifiées par ce traitement) sont utilisées, en complément des valeurs de puissance sphérique $R_{OD}$, $R_{OG}$ en vision de loin, pour obtenir les puissances sphériques sur les zones de lentilles ophtalmiques qui correspondent à l'autre proximité de vision caractérisée par cette addition, ici la vision de près.

On évite ainsi l'inconfort qui pourrait être causé au porteur du fait d'une prescription d'addition de puissance sphérique différenciée (oeil droit/oeil gauche) trop marquée.

Selon une variante envisageable pour l'étape E122, le traitement effectué par cette étape consiste à modifier au moins une des deux valeurs d'addition de puissance sphérique équivalente $AE_{OD}$, $AE_{OG}$ de manière à annuler toute différence entre ces deux valeurs, par exemple en prenant pour les deux yeux (et donc notamment pour l'œil Y non-dominant en vision de loin) la valeur d'addition équivalente $AE_Z$ mesurée à l'étape E114 pour l'œil dominant Z.

On a donc dans ce cas les valeurs suivantes après traitement par l'étape E122 : $AE'_{OG}=AE'_{OD}=AE_Z$ (seule la valeur $AE_Y$ pour l'œil non-dominant étant donc modifiée par cette étape).

Selon une autre variante envisageable pour l'étape E122, le traitement effectué à cette étape (qui peut éventuellement être combiné aux traitements proposés ci-dessus) consiste à modifier éventuellement chaque valeur d'addition de puissance sphérique équivalente $AE_{OD}$, $AE_{OG}$ obtenue à l'étape E114 de sorte que l'écart entre cette valeur $AE_{OD}$, $AE_{OG}$ et la valeur d'addition standard $A_{ST}$ obtenue à l'étape E112 soit inférieur ou égal à un seuil prédéfini, par exemple 0,25 dioptrie.

On remarque que cette variante permet également de limiter l'écart entre les deux valeurs d'addition de puissance sphérique équivalente $AE_{OD}$, $AE_{OG}$ puisque, après modification éventuelle afin d'être toutes deux suffisamment proches de la valeur d'addition standard $A_{ST}$, les valeurs d'addition de puissance sphérique équivalente $AE'_{OD}$, $AE'_{OG}$ obtenues à l'issue de l'étape E112 seront nécessairement proches l'une de l'autre.

Selon une autre variante envisageable pour l'étape E122, le traitement effectué à cette étape consiste à modifier éventuellement chaque valeur d'addition de puissance sphérique équivalente $AE_{OD}$, $AE_{OG}$ de manière à annuler toute différence entre chacune de ces deux valeurs $AE_{OD}$, $AE_{OG}$ et la valeur d'addition standard $A_{ST}$ obtenue à l'étape E112.

On traite également les deux variations du vecteur de puissance cylindrique $\overrightarrow{VC_{OD}}$, $\overrightarrow{VC_{OG}}$, obtenues respectivement pour l'œil droit OD et l'œil gauche OG, au moyen d'une sous-étape E124 de limitation de l'écart entre ces deux variations.

Selon un premier mode de réalisation envisageable pour la sous-étape E124, on applique les règles de traitement suivantes :

- si le module $\|\overrightarrow{VC_Z}\|$ de la variation du vecteur de puissance cylindrique pour l'œil dominant Z est inférieur à un premier seuil prédéfini (ici 0,15 dioptrie), alors le module $\|\overrightarrow{VC_Y}\|$ de la variation du vecteur de puissance cylindrique pour l'œil non-dominant Y est limité à un second seuil prédéfini, valant par exemple le double du premier seuil prédéfini (ici le second seuil vaut 0,30 dioptrie) ;
- si le module $\|\overrightarrow{VC_Z}\|$ de la variation du vecteur de puissance cylindrique pour l'œil dominant Z est supérieur (ou égal) au premier seuil prédéfini (ici 0,15 dioptrie), alors le module $\|\overrightarrow{VC_Y}\|$ de la variation du vecteur de puissance cylindrique pour l'œil non-dominant Y est limité proportionnellement au module $\|\overrightarrow{VC_Z}\|$ de la variation du vecteur de puissance cylindrique pour l'œil dominant Z, par exemple au double du module $\|\overrightarrow{VC_Z}\|$ de la variation du vecteur de puissance cylindrique pour l'œil dominant Z.

Autrement dit, si l'on note $\overrightarrow{VC'_Y}$ la variation du vecteur de puissance cylindrique pour l'œil non-dominant Y après traitement par l'étape E124, la règle de traitement qui vient d'être décrite s'écrit :

- si $\|\overrightarrow{VC_Z}\|$ < 0,15 et $\|\overrightarrow{VC_Y}\|$ < 0,3, alors $\overrightarrow{VC'_Y}$ = $\overrightarrow{VC_Y}$ (la variation du vecteur de puissance cylindrique pour l'œil non-dominant est alors inchangée par l'étape E124) ;
- si $\|\overrightarrow{VC_Z}\|$ < 0,15 et $\|\overrightarrow{VC_Y}\|$ ≥ 0,3, alors $\overrightarrow{VC'_Y}$ est choisi tel que: $\|\overrightarrow{VC'_Y}\|$ = 0,3 (l'angle du vecteur $\overrightarrow{VC'_Y}$ étant identique à celui du vecteur $\overrightarrow{VC_Y}$);
- si $\|\overrightarrow{VC_Z}\|$ ≥ 0,15 et $\|\overrightarrow{VC_Y}\|$ < 2.$\|\overrightarrow{VC_Z}\|$, alors $\overrightarrow{VC'_Y}$ = $\overrightarrow{VC_Y}$ (la variation du vecteur de puissance cylindrique pour l'œil non-dominant est alors inchangée par l'étape E124) ;
- si $\|\overrightarrow{VC_Z}\|$ ≥ 0,15 et $\|\overrightarrow{VC_Y}\|$ ≥ 2.$\|\overrightarrow{VC_Z}\|$, alors $\overrightarrow{VC'_Y}$ est choisi tel que : $\|\overrightarrow{VC'_Y}\|$ = 2.$\|\overrightarrow{VC_Z}\|$ (l'angle du vecteur $\overrightarrow{VC'_Y}$ étant

identique à celui du vecteur $\overrightarrow{VC_Y}$).

On remarque que, dans ce mode de réalisation, la variation du vecteur de puissance cylindrique $\overrightarrow{VC_Z}$ de l'œil dominant Z n'est pas modifiée par l'étape E124 (soit $\overrightarrow{VC'_Z}$ = $\overrightarrow{VC_Z}$).

On a en effet remarqué que la mesure réalisée à l'étape E122 définissait en général un plus fort besoin de variation du vecteur de puissance cylindrique pour l'œil non-dominant Y mais également qu'une variation du vecteur de puissance cylindrique trop déséquilibrée (entre l'œil droit OD et l'œil gauche OG) produisait un inconfort pour le porteur, ce qui est évité grâce aux règles de traitement ci-dessus.

Selon un second mode de réalisation envisageable pour la sous-étape E124, le traitement effectué consiste à limiter la variation du vecteur de puissance cylindrique dont le module est maximum, en tenant compte de la variation du vecteur de puissance cylindrique dont le module est minimum. (Aucune modification n'est apportée aux variations du vecteur de puissance cylindrique si leurs deux modules sont égaux.)

Autrement dit, si on note I l'œil pour lequel le module de la variation du vecteur de puissance cylindrique est minimum (I est tel que : $\|\overrightarrow{VC_I}\|$ = min{$\|\overrightarrow{VC_{OD}}\|$, $\|\overrightarrow{VC_{OG}}\|$}) et J l'œil pour lequel le module de la variation du vecteur de puissance cylindrique est maximum (J est tel que : $\|\overrightarrow{VC_J}\|$ = max{$\|\overrightarrow{VC_{OD}}\|$, $\|\overrightarrow{VC_{OG}}\|$}), on limite comme suit le module de la variation du vecteur de puissance cylindrique pour l'œil J :

- si $\|\overrightarrow{VC_I}\|$ < 0,15 et $\|\overrightarrow{VC_J}\|$ < 0,3, alors $\overrightarrow{VC'_J}$ = $\overrightarrow{VC_J}$;
- si $\|\overrightarrow{VC_I}\|$ < 0,15 et $\|\overrightarrow{VC_J}\|$ ≥ 0,3, alors $\overrightarrow{VC'_J}$ est choisi tel que: $\|\overrightarrow{VC'_J}\|$ = 0,3 (l'angle du vecteur $\overrightarrow{VC'_J}$ étant identique à celui du vecteur $\overrightarrow{VC_J}$) ;
- si $\|\overrightarrow{VC_I}\|$ > 0,15 et $\|\overrightarrow{VC_J}\|$ < 2.$\|\overrightarrow{VC_I}\|$, alors $\overrightarrow{VC'_J}$ = $\overrightarrow{VC_J}$ ;
- si $\|\overrightarrow{VC_I}\|$ ≥ 0,15 et $\|\overrightarrow{VC_J}\|$ ≥ 2.$\|\overrightarrow{VC_I}\|$, alors $\overrightarrow{VC'_J}$ est choisi tel que : $\|\overrightarrow{VC'_J}\|$ = 2.$\|\overrightarrow{VC_I}\|$ (l'angle du vecteur $\overrightarrow{VC'_J}$ étant identique à celui du vecteur $\overrightarrow{VC_J}$).

On propose dans ce mode de réalisation de ne pas modifier la variation du vecteur de puissance cylindrique $\overrightarrow{VC_I}$ de l'œil I pour lequel le module de cette variation est minimum (soit $\overrightarrow{VC'_I}$ = $\overrightarrow{VC_I}$).

Selon un troisième mode de réalisation envisageable pour la sous-étape E124, la variation du vecteur de puissance cylindrique $\overrightarrow{VC_Y}$ pour l'œil non-dominant Y peut être modifiée de manière à être égale en module à la variation du vecteur de puissance cylindrique $\overrightarrow{VC_Z}$ pour l'œil dominant Z (soit $\|\overrightarrow{VC'_Y}\|$ = $\|\overrightarrow{VC_Z}\|$), par exemple lorsque l'écart entre ces deux variations est important (i.e. supérieur à un seuil prédéfini) en module et/ou en angle. La direction du vecteur de puissance cylindrique $\overrightarrow{VC_Y}$ pour l'œil non-dominant Y est par exemple quant à elle choisie de sorte que l'angle de variation de l'astigmatisme soit de signe opposé sur les deux yeux.

Quel que soit le mode de réalisation mis en oeuvre, les variations du vecteur de puissance cylindrique $\overrightarrow{VC'_{OD}}$, $\overrightarrow{VC'_{OG}}$ obtenues après traitement par l'étape E124 sont respectivement utilisées, en complément des vecteurs de puissance cylindrique $\overrightarrow{C_{OD}}$, $\overrightarrow{C_{OG}}$ en vision de loin, pour obtenir les puissances cylindriques des lentilles ophtalmiques dans les régions de ces lentilles ophtalmiques qui correspondent à la vision de près.

L'étape E120 inclut éventuellement en outre, après les traitements des étapes E122 et E124 qui viennent d'être décrits, une mesure de la performance visuelle (par exemple une mesure de l'acuité visuelle monoculaire et/ou binoculaire, typiquement avec des lunettes d'essai apportant une correction correspondant aux puissances déterminées) afin de s'assurer que la prise en compte des variations du vecteur de puissance cylindrique pour la vision de près améliore la performance visuelle.

Selon une variante envisageable, plutôt que de réaliser toutes les actions de l'étape E114 puis ensuite celles de l'étape E120 comme décrit ci-dessus, on pourrait procéder comme suit :

- réaliser dans l'étape E114 seulement les actions relatives à la correction sphérique (notamment la détermination des valeurs d'addition de puissance sphérique équivalente $AE_{OD}$, $AE_{OG}$) ;
- réaliser les actions de la sous-étape E122 (limitation des écarts pour l'addition de puissance sphérique équivalente) ;
- réaliser dans l'étape E114 les actions relatives à la correction cylindrique (en tenant compte des valeurs d'addition de puissance sphérique équivalente modifiées $AE'_{OD}$, $AE'_{OG}$ obtenues au moyen de la sous-étape E122, ce qui permet d'améliorer les mesures effectuées lors de la présente étape) ;
- réaliser les actions de la sous-étape E124.

La figure 3 représente un second exemple de procédé de détermination des puissances prescrites conforme à l'invention.

Un tel procédé comprend une première étape E210 de définition des besoins de correction sphérique et cylindrique du porteur (qui correspond à l'étape E10 décrite ci-dessus) et une seconde étape E220 de détermination des puissances sphériques et cylindriques pour deux lentilles ophtalmiques destinées à être placées devant les yeux du porteur (la seconde étape E220 correspondant à l'étape E20 décrite ci-dessus).

L'étape E210 comprend la mesure pour un seul des deux yeux du porteur, ici l'œil dominant Z (pour lequel les mesures sont en général plus stables), des besoins en correction sphérique et cylindrique, pour plusieurs proximités de vision (ici en vision de loin et en vision de près).

Ceci permet donc de définir :

- la valeur de puissance sphérique $R_Z$ de correction en vision de loin pour l'œil dominant Z ;
- le vecteur de puissance cylindrique $\overrightarrow{C_Z}$ de correction en vision de loin pour l'œil dominant Z ;
- l'addition de puissance sphérique équivalente $AE_Z$ pour une autre proximité de vision (ici la vision de près) ;
- la variation $\overrightarrow{VC_Z}$ du vecteur de puissance cylindrique pour l'autre proximité de vision (ici la vision de près).

On réalise également à l'étape E210 des mesures en vision de loin pour l'autre oeil, ici l'œil non-dominant Y, ce qui permet de définir :

- la valeur de puissance sphérique $R_Y$ de correction en vision de loin pour l'œil non-dominant Y ;

- le vecteur de puissance cylindrique $\overrightarrow{C_Y}$ de correction en vision de loin pour l'œil non-dominant Y.

On utilise par exemple pour ces mesures les mêmes techniques que celles décrites plus haut en référence à l'étape E114 (appliquées cette fois à la vision de loin et à la vision de près).

Au cours de l'étape E220, on utilise les résultats de l'étape E210 sans modification afin de déterminer les puissances sphérique et cylindrique des deux lentilles ophtalmiques.

Toutefois, afin de déterminer les puissances sphérique et cylindrique pour la vision de près pour la lentille ophtalmique associée à l'œil pour lequel aucune mesure n'a été effectuée en vision de près (ici l'œil non-dominant Y), on détermine comme suit au cours de l'étape E220 l'addition de puissance sphérique équivalente $AE_Y$ et la variation du vecteur de puissance cylindrique $\overrightarrow{VC_Y}$ pour cet œil :

- l'addition de puissance sphérique équivalente $AE_Y$ est choisie égale à celle relative à l'autre oeil $AE_Z$;
- la variation du vecteur de puissance cylindrique $\overrightarrow{VC_Y}$ est choisie de sorte que son module soit proche ou identique du module $\|\overrightarrow{VC_Z}\|$ de la variation du vecteur de puissance cylindrique relative à l'autre oeil, son orientation étant choisi de façon à obtenir une variation d'angle de correction cylindrique de signe opposé sur les deux yeux.

Par exemple, dans le cas décrit ici où l'œil pour lequel les mesures ont été effectuées est l'œil dominant Z :

- si $\|\overrightarrow{VC_Z}\| < 0{,}15$, alors on choisit $\overrightarrow{VC_Y}$ tel que $\|\overrightarrow{VC_Y}\| < 0{,}3$ ;
- si $\|\overrightarrow{VC_Z}\| \geq 0{,}15$, alors on choisit $\overrightarrow{VC_Y}$ tel que $\|\overrightarrow{VC_Y}\| < 2.\|\overrightarrow{VC_Z}\|$.

En variante, lorsque l'œil pour lequel les mesures ont été effectuées est l'œil non-dominant Y (auquel cas la variation du vecteur de puissance cylindrique $\overrightarrow{VC_Y}$ est déjà déterminée pour cet oeil Y), on choisit par exemple la variation du vecteur de puissance cylindrique $\overrightarrow{VC_Z}$ pour l'œil dominant Z telle que :

$$\|\overrightarrow{VC_Z}\| \leq \|\overrightarrow{VC_Y}\|.$$

Selon une variante envisageable, on peut prévoir au cours de l'étape E220 que l'addition de puissance sphérique équivalente $AE_Z$ obtenue à l'étape E210 soit éventuellement modifiée de manière à limiter l'écart entre cette valeur $AE_Z$ et l'addition standard $A_{ST}$ (mentionnée plus haut dans le cadre de la description de la figure 2) à un seuil prédéfini (par exemple de 0,25 dioptrie). Par exemple, si l'addition standard $A_{ST}$ vaut 3 dioptries et l'addition équivalente $AE_Z$ vaut 2,5 dioptries, cette dernière est modifiée de manière à valoir 2,75 dioptries.

La figure 4 représente schématiquement un exemple de procédé de réalisation d'une lentille ophtalmique sur la base de puissances prescrites, qui correspond à l'étape E30 mentionnée ci-dessus. Naturellement, ce procédé devra être mis en oeuvre pour chacune des deux lentilles ophtalmiques de la paire de lentilles prescrites au porteur.

Ce procédé débute par une étape E32 de détermination d'une loi de variation cible pour la correction de puissance cylindrique.

On note $\alpha$ et $\beta$ les angles qui définissent une direction du regard par rapport au centre de rotation de l'œil : $\alpha$ est l'angle formé entre la direction du regard et le plan horizontal contenant le centre de rotation de l'œil ; $\beta$ est l'angle formé entre la direction du regard et le plan vertical contenant le centre de rotation de l'œil.

On définit lors de l'étape E32 la correction cylindrique (module, axe) à apporter pour l'ensemble des directions de regard traversant (dans les conditions standards de port des lunettes, dites "*au porté*") la lentille ophtalmique, sur la base des puissances prescrites obtenues à l'étape E20.

Dans l'exemple décrit ici, on définit 3 zones :

- les directions du regard pour lesquelles $\alpha < \alpha_{min}$ (quel que soit $\beta$), qui correspondent à la vision de loin ;
- les directions du regard pour lesquelles $\alpha > \alpha_{max}$ (quel que soit $\beta$), qui correspondent à la vision de près ;
- les directions du regard pour lesquelles $\alpha_{min} \leq \alpha \leq \alpha_{max}$, qui correspondent à une zone intermédiaire.

Selon une première possibilité de réalisation, on utilise une loi de variation linéaire selon $\alpha$ dans la zone intermédiaire pour définir le module et l'axe de la correction cylindrique à apporter.

Si on note X l'œil correspondant à la lentille ophtalmique construite ici, et Cyl et Axe respectivement les valeurs de module et d'angle de correction cylindrique souhaitée, on a alors :

- $Cyl(\alpha) = \|\overrightarrow{C_X}\|$ et $Axe(\alpha) = \arg \overrightarrow{C_X}$ pour $\alpha < \alpha_{min}$ (où $\arg \overrightarrow{V}$ est la fonction qui donne l'angle du vecteur $\overrightarrow{V}$) ;
- $Cyl(\alpha) = \lambda(\alpha).\|\overrightarrow{C_X}\| + \mu(\alpha).\|\overrightarrow{C_X} + \overrightarrow{VC_X}\|$ et $Axe(\alpha) = \lambda(\alpha).\arg \overrightarrow{C_X} + \mu(\alpha).\arg(\overrightarrow{C_X} + \overrightarrow{VC_X})$ pour $\alpha_{min} \leq \alpha \leq \alpha_{max}$, avec $\lambda(\alpha) = (\alpha_{max}-\alpha)/(\alpha_{max}-\alpha_{min})$ et $\mu(\alpha) = (\alpha-\alpha_{min})/(\alpha_{max}-\alpha_{min})$ ;
- $Cyl(\alpha) = \|\overrightarrow{C_X} + \overrightarrow{VC_X}\|$ et $Axe(\alpha) = \arg(\overrightarrow{C_X} + \overrightarrow{VC_X})$ pour $\alpha > \alpha_{max}$.

Selon une seconde possibilité de réalisation, on utilise les grandeurs M, J0, J45 classiquement définie comme : $M = S + C/2$ ; $J0 = -(C/2).\cos 2A$ ; $J45 = -(C/2).\sin 2A$, avec S la puissance sphérique, C la puissance cylindrique (module) et A l'angle de cylindre.

On peut ainsi définir les grandeurs suivantes sur la base des puissances prescrites obtenues à l'étape E20 pour l'œil X concerné :

- en vision de loin,
$$M_{VL} = R_X + \frac{\|\overrightarrow{C_X}\|}{2} \ ; \ J0_{VL} = -\frac{\|\overrightarrow{C_X}\|}{2}.\cos [2.\arg \overrightarrow{C_X}] \ ;$$

$$J45_{VL} = -\frac{\|\overrightarrow{C_X}\|}{2}.\sin [2.\arg \overrightarrow{C_X}] \ ;$$

- en vision de près,
$$M_{VP} = M_{VL} + AE_X + \frac{\|\overrightarrow{C_X+VC_X}\|}{2} \ ;$$

$$J0_{VP} = -\frac{\|\overrightarrow{C_X+VC_X}\|}{2}.\cos [2.\arg (\overrightarrow{C_X} + \overrightarrow{VC_X})] \ ;$$

$$J45_{VP} = -\frac{\|\overrightarrow{C_X+VC_X}\|}{2}.\sin [2.\arg (\overrightarrow{C_X} + \overrightarrow{VC_X})].$$

On utilise les valeurs $M_{VL}$, $J0_{VL}$, $J45_{VL}$ pour la zone correspondant à la vision de loin ($\alpha < \alpha_{min}$) et les valeurs $M_{VP}$, $J0_{VP}$, $J45_{VP}$ pour la zone correspondant à la vision de près ($\alpha > \alpha_{max}$).

Pour la zone intermédiaire ($\alpha_{min} \leq \alpha_i \leq \alpha_{max}$), on utilise les valeurs suivantes (avec $\alpha_i = \alpha_1\beta i + b_1$ où $a_1$ et $b_1$ sont des constantes) :

$$M(\alpha_i) = \lambda(\alpha_i).M_{VL} + \mu(\alpha_i).M_{VP} \ ;$$

$$J0(\alpha_i) = \lambda(\alpha_i).J0_{VL} + \mu(\alpha_i).J0_{VP} \ ;$$

- $J45(\alpha_i) = \lambda(\alpha_i).J45_{VL} + \mu(\alpha_i).J45_{VP}$, les paramètres $\lambda(\alpha_i)$ et $\mu(\alpha_i)$ étant définis comme indiqué ci-dessus pour la première possibilité de réalisation.

Le procédé de la figure 4 se poursuit par une étape E34 de détermination d'un profil spatial de méridienne, sur la base notamment de la loi de variation cible obtenue à l'étape E32.

Selon une première possibilité de réalisation de l'étape E34, on lance un tracé de rayon afin de définir pour chaque direction de regard les points appartenant au profil de la méridienne. Selon cette possibilité, l'étape E34 comprend les sous-étapes suivantes :

- définition d'un ergorama (c'est-à-dire la donnée de la distance de l'objet observé pour chaque direction du regard) ;
- modélisation de la lentille ophtalmique et calcul de la puissance pour chaque direction de regard $(\alpha, \beta)$ en fonction de la distance objet, sur la base de la loi de variation définie à l'étape E32 ;
- lancé d'un tracé de rayon reliant l'objet au centre de rotation de l'œil ;
- récupération du point d'impact sur la face avant de la lentille ophtalmique.

Chaque point ainsi déterminé par ce processus appartient au profil spatial de la méridienne recherché à l'étape E34.

Selon une seconde possibilité de réalisation de l'étape E34, on utilise un modèle prenant en compte les effets prismatiques liés à la puissance du verre (puissance moyenne, astigmatisme et axe) pour chaque direction du regard. On définit ainsi les points appartenant au profil spatial de la méridienne. Connaissant le nouveau profil de méridienne, la définition de la surface peut être cisaillée de façon à être décalée sur ce profil.

On procède alors à une étape E36 d'optimisation de la surface optique de la lentille ophtalmique, par exemple sur la base de la méthode d'atorisation décrite dans la demande de brevet EP 990 939.

Dans le cadre de cette méthode, on utilise par exemple comme lentille de référence une lentille possédant les puissances sphériques et cylindriques prescrites, obtenues à l'étape E20, tant pour la vision de loin que pour la vision de près ; la lentille cible correspond à la conception que l'on souhaite fournir au porteur (avec l'optique d'un verre sphérique, par exemple).

On met alors en oeuvre la méthode d'optimisation précitée (décrite dans la demande de brevet EP 930 939) qui fait évoluer la géométrie de la lentille de façon à minimiser, pour chaque direction de regard, les écarts entre les performances optiques données par la lentille cible et celles données par la lentille de référence, en tenant compte de la loi de variation de puissance cylindrique déterminée à l'étape E32 et de la valeur d'addition de puissance sphérique équivalente $AE_X$.

Au cours de l'optimisation, les valeurs de puissance sphérique équivalente et d'astigmatisme (module, axe) sont donc déterminées en prenant en compte les prescriptions pour chaque direction de regard, évaluées comme indiqué ci-dessus à partir des puissances sphérique et cylindrique prescrites (obtenues à l'étape E30) et de la loi de variation choisie (ici linéaire, comme expliqué à l'étape E32).

On obtient ainsi une définition optimisée des surfaces de la lentille ophtalmique.

Selon une variante envisageable pour l'étape E36, la méthode d'atorisation est mise en oeuvre sans tenir compte de la variation de prescription relative à la puissance cylindrique et des nappes sont ensuite ajoutées pour obtenir la variation de puissance cylindrique requise.

Selon cette variante, la lentille de référence est une lentille possédant les puissances sphériques prescrites, obtenues à l'étape E20, tant pour la vision de loin que pour la vision de près (soit les valeurs $R_X$ et $AE_X$ pour l'œil X) ; la lentille cible correspond à la conception que l'on souhaite fournir au porteur (avec l'optique d'un verre sphérique, par exemple).

On utilise ensuite une combinaison de nappes de façon à s'approcher au mieux des puissances prescrites obtenues à l'étape E20, comme décrit par exemple dans la demande de brevet WO2011/000 845. La méthode décrite dans cette demande de brevet utilise également un algorithme d'optimisation, au cours duquel seront prises en compte les prescriptions pour chaque direction de regard, évaluées comme indiqué ci-dessus à partir des puissances sphérique et cylindrique prescrites (obtenues à l'étape E30) et de la loi de variation choisie.

Le procédé de la figure 4 se termine à l'étape E38 par la fabrication (par exemple par usinage) d'une lentille ophtalmique ayant les surfaces définies grâce à l'étape E36.

La lentille ophtalmique à l'étape E36 peut être une lentille progressive, une lentille régressive, un lentille multifocale du type double ou triple foyers, ou une lentille simple foyer.

Dans le cas d'une lentille progressive, régressive, ou triple foyers, le verre présente des zones définies de vision de près, de vision intermédiaire et de vision de loin, et l'invention peut s'appliquer en choisissant les points de différentes proximités parmi au moins 2 zones, pour au moins une des 2 grandeurs parmi la grandeur d'addition et/ou la grandeur de variation de cylindre. Par exemple, on peut choisir 2 points de différentes proximités en prenant un point appartenant à la zone de vision de loin, et un autre point appartenant à la zone de vision de près d'un progressif et appliquer l'invention sur les grandeurs d'addition de puissance sphérique équivalente et sur les grandeurs de variation du vecteur de puissance cylindrique.

Dans le cas d'un verre double foyer, le verre présente des zones définies de vision de près et de vision de loin, et l'invention peut s'appliquer sur la grandeur d'addition et/ou sur la grandeur de variation de cylindre et en choisissant 1 point dans la zone de vision de loin et un second point de différente proximité dans la zone de vision de près.

Dans le cas d'un verre simple foyer, on peut par exemple appliquer l'invention sur la grandeur de variation de cylindre, en définissant un premier point au centre du verre, correspondant à un usage du verre en vision de loin, et un second point dans une zone inférieure du verre correspondant à un usage du verre en vision de près.

**Revendications**

1. Procédé d'obtention d'une paire de lentilles ophtalmiques pour la correction des défauts de réfraction sphérique et cylindrique des deux yeux d'un porteur, comportant :

   - une étape de définition (E10) des besoins de correction sphérique et cylindrique du porteur pour différentes proximités de vision,
   - une étape de détermination (E20) des puissances sphériques et cylindriques desdites lentilles ophtalmiques en des points de vision de différentes proximités, en fonction des besoins de correction sphérique et cylindrique du porteur précédemment définis, et
   - une étape de réalisation (E30) desdites lentilles ophtalmiques sur la base des puissances sphériques et cylindriques déterminées ;

   **caractérisé en ce que** la détermination (E20) des puissances d'au moins une des deux lentilles ophtalmiques est réalisée de manière à limiter l'écart obtenu, entre les deux lentilles ophtalmiques de la paire, sur l'une au moins des grandeurs suivantes :

   - l'addition de puissance sphérique équivalente entre les points de vision de différentes proximités, et
   - la variation du vecteur de puissance cylindrique entre les points de vision de différentes proximités.

2. Procédé d'obtention selon la revendication 1, selon lequel l'écart obtenu sur l'une et/ou l'autre desdites grandeurs est inférieur à une valeur seuil prédéfinie.

3. Procédé d'obtention selon la revendication 2, selon lequel l'écart obtenu entre les deux lentilles ophtalmiques de la paire sur l'addition de puissance sphérique équivalente entre les points de vision de différentes proximités est inférieur à 0,25 dioptrie.

4. Procédé d'obtention selon l'une des revendications 1 et 2, selon lequel la détermination (E20) des puissances d'au moins une des deux lentilles ophtalmiques est réalisée en appliquant les règles suivantes :

   - l'une des deux lentilles ophtalmiques de la paire présentant une variation du vecteur de puissance cylindrique minimale et inférieure à 0,15 dioptrie, la variation du vecteur de puissance cylindrique de l'autre lentille ophtalmique de la paire est inférieure à 0,3 dioptries, ou
   - l'une des deux lentilles ophtalmiques de la paire présentant une variation du vecteur de puissance cylindrique minimale et supérieure ou égale à 0,15 dioptrie, la variation du vecteur de puissance cylindrique de l'autre lentille ophtalmique de la paire est inférieure au double de cette variation du vecteur de puissance cylindrique minimale.

5. Procédé d'obtention selon l'une des revendications 1 à 4, selon lequel l'écart sur la variation du vecteur de puissance cylindrique entre les points de vision de différentes proximités est obtenu par modification de l'amplitude et/ou de l'angle du vecteur de puissance cylindrique de l'une des deux lentilles ophtalmiques de la paire en un point de vision de près.

6. Procédé d'obtention selon l'une des revendications 1 à 5, selon lequel la détermination des puissances d'au moins une des deux lentilles est également réalisée de manière à limiter la différence obtenue, pour les deux lentilles ophtalmiques de la paire, entre l'addition de puissance sphérique équivalente et le besoin d'addition.

7. Procédé d'obtention selon la revendication 6, selon lequel la différence obtenue entre l'addition de puissance sphérique équivalente et le besoin d'addition est inférieure à 0,25 dioptries.

8. Procédé d'obtention selon l'une des revendications 1 à 7, selon lequel la détermination des puissances sphérique et cylindrique de ladite au moins une des deux lentilles ophtalmiques en des points de vision de différentes proximités est réalisée avec un pas de 0,125 dioptrie.

9. Procédé d'obtention selon l'une des revendications 1 à 8, selon lequel l'étape de détermination est réalisée de manière à ce que les puissances sphérique et cylindrique, aux points de vision des différentes proximités, de la lentille ophtalmique destinée à être placée devant l'oeil dominant du porteur correspondent aux besoins de correction sphérique et cylindrique auxdits points de vision du porteur.

10. Procédé d'obtention selon l'une des revendications 1 à 9, selon lequel lesdits points de vision de différentes proximités correspondent à des points de vision de loin, de vision intermédiaire et/ou de vision de près du porteur.

11. Procédé d'obtention selon l'une des revendications 1 à 10, selon lequel lesdits points de vision de différentes proximités correspondent à des points de vision de loin et de vision de près du porteur, et les besoins de correction sphérique et cylindrique du porteur sont définis à partir d'une mesure de la réfraction sphérique et cylindrique en vision de loin et en vision de près des deux yeux du porteur.

12. Procédé d'obtention selon l'une des revendications 1 à 10, selon lequel lesdits points de vision de différentes proximités correspondent à des points de vision de loin et de vision de près du porteur, et les besoins de correction sphérique et cylindrique du porteur sont définis (E210) à partir d'une mesure de la réfraction sphérique et cylindrique en vision de loin des deux yeux du porteur et d'une mesure de la réfraction sphérique et cylindrique en vision de près d'au moins un oeil du porteur.

13. Procédé d'obtention selon la revendication 12, selon lequel ladite mesure (E210) de la réfraction sphérique et cylindrique en vision de près est réalisée sur l'œil dominant du porteur.

14. Procédé d'obtention selon l'une des revendications 1 à 13, dans lequel l'étape de définition des besoins comprend une sous-étape de définition des besoins de correction cylindrique du porteur pour différentes proximités de vision réalisée après une étape de limitation de l'écart obtenu, entre les deux lentilles ophtalmiques de la paire, sur l'addition de puissance sphérique équivalente.

**Patentansprüche**

1. Verfahren zur Herstellung eines Paars ophthalmischer Linsen für die Korrektur der sphärischen und zylindrischen Brechungsfehler der zwei Augen eines Trägers, das aufweist:

- einen Schritt der Definition (E10) der sphärischen und zylindrischen Korrekturbedarfe des Trägers für verschiedene Sichtnähen,
- einen Schritt der Bestimmung (E20) der sphärischen und zylindrischen Leistungen der ophthalmischen Linsen an Sichtpunkten verschiedener Nähen, abhängig von den vorher definierten sphärischen und zylindrischen Korrekturbedarfen des Trägers, und
- einen Schritt der Realisierung (E30) der ophthalmischen Linsen auf der Basis der bestimmten sphärischen und zylindrischen Leistungen;

**dadurch gekennzeichnet, dass** die Bestimmung (E20) der Leistungen mindestens einer der zwei ophthalmischen Linsen so durchgeführt wird, dass die zwischen den zwei ophthalmischen Linsen des Paars erhaltene Abweichung auf mindestens eine der folgenden Größen begrenzt wird:

- die Addition äquivalenter sphärischer Leistung zwischen den Sichtpunkten unterschiedlicher Nähen, und
- die Änderung des zylindrischen Leistungsvektors zwischen den Sichtpunkten unterschiedlicher Nähen.

2. Herstellungsverfahren nach Anspruch 1, gemäß dem die an der einen und/oder anderen der Größen erhaltene Abweichung niedriger ist als ein vordefinierter Schwellwert.

3. Herstellungsverfahren nach Anspruch 2, gemäß dem die zwischen den zwei ophthalmischen Linsen des Paars bei der Addition äquivalenter sphärischer Leistung zwischen den Sichtpunkten unterschiedlicher Nähen erhaltene Abweichung geringer ist als 0,25 Dioptrien.

**4.** Herstellungsverfahren nach einem der Ansprüche 1 und 2, gemäß dem die Bestimmung (E20) der Leistungen mindestens einer der zwei ophthalmischen Linsen unter Anwendung der folgenden Regeln durchgeführt wird:

- wenn eine der zwei ophthalmischen Linsen des Paars eine Änderung des zylindrischen Leistungsvektors aufweist, die minimal und geringer als 0,15 Dioptrien ist, die Änderung des zylindrischen Leistungsvektors der anderen ophthalmischen Linse des Paars geringer ist als 0,3 Dioptrien, oder
- wenn eine der zwei ophthalmischen Linsen des Paars eine Änderung des zylindrischen Leistungsvektors aufweist, die minimal und größer als oder gleich 0,15 Dioptrien ist, die Änderung des zylindrischen Leistungsvektors der anderen ophthalmischen Linse des Paars geringer ist als das Doppelte dieser minimalen Änderung des zylindrischen Leistungsvektors.

**5.** Herstellungsverfahren nach einem der Ansprüche 1 bis 4, gemäß dem die Abweichung bei der Änderung des zylindrischen Leistungsvektors zwischen den Sichtpunkten unterschiedlicher Nähen durch Veränderung der Amplitude und/oder des Winkels des zylindrischen Leistungsvektors einer der zwei ophthalmischen Linsen des Paars an einem Nahsichtpunkt erhalten wird.

**6.** Herstellungsverfahren nach einem der Ansprüche 1 bis 5, gemäß dem die Bestimmung der Leistungen mindestens einer der zwei Linsen ebenfalls so durchgeführt wird, dass die für die zwei ophthalmischen Linsen des Paars erhaltene Differenz zwischen der Addition einer äquivalenten sphärischen Leistung und dem Additionsbedarf begrenzt wird.

**7.** Herstellungsverfahren nach Anspruch 6, gemäß dem die erhaltene Differenz zwischen der Addition einer äquivalenten sphärischen Leistung und dem Additionsbedarf geringer ist als 0,25 Dioptrien.

**8.** Herstellungsverfahren nach einem der Ansprüche 1 bis 7, gemäß dem die Bestimmung der sphärischen und zylindrischen Leistungen der mindestens einen der zwei ophthalmischen Linsen an Sichtpunkten unterschiedlicher Nähen mit einer Teilung von 0,125 Dioptrien durchgeführt wird.

**9.** Herstellungsverfahren nach einem der Ansprüche 1 bis 8, gemäß dem der Bestimmungsschritt so durchgeführt wird, dass die sphärischen und zylindrischen Leistungen an den Sichtpunkten der unterschiedlichen Nähen der ophthalmischen Linse, die dazu bestimmt ist, vor dem dominanten Auge des Trägers platziert zu werden, den sphärischen und zylindrischen Korrekturbedarfen an den Sichtpunkten des Trägers entsprechen.

**10.** Herstellungsverfahren nach einem der Ansprüche 1 bis 9, gemäß dem die Sichtpunkte unterschiedlicher Nähen Fernsichtpunkten, Zwischensichtpunkten und/oder Nahsichtpunkten des Trägers entsprechen.

**11.** Herstellungsverfahren nach einem der Ansprüche 1 bis 10, gemäß dem die Sichtpunkte unterschiedlicher Nähen Fern- und Nahsichtpunkten des Trägers entsprechen, und die sphärischen und zylindrischen Korrekturbedarfe des Trägers ausgehend von einer Messung der sphärischen und zylindrischen Brechung in Fern- und Nahsicht der zwei Augen des Trägers definiert werden.

**12.** Herstellungsverfahren nach einem der Ansprüche 1 bis 10, gemäß dem die Sichtpunkte unterschiedlicher Nähen Fern- und Nahsichtpunkten des Trägers entsprechen, und die sphärischen und zylindrischen Korrekturbedarfe des Trägers ausgehend von einer Messung der sphärischen und zylindrischen Brechung in Fernsicht der zwei Augen des Trägers und einer Messung der sphärischen und zylindrischen Brechung in Nahsicht mindestens eines Auges des Trägers definiert werden (E210).

**13.** Herstellungsverfahren nach Anspruch 12, gemäß dem die Messung (E210) der sphärischen und zylindrischen Brechung in Nahsicht am dominanten Auge des Trägers durchgeführt wird.

**14.** Herstellungsverfahren nach einem der Ansprüche 1 bis 13, wobei der Schritt der Definition der Bedarfe einen Teilschritt der Definition der zylindrischen Korrekturbedarfe des Trägers für unterschiedliche Sichtnähen, durchgeführt nach einem Schritt der Begrenzung der erhaltenen Abweichung, zwischen den zwei ophthalmischen Linsen des Paars, nach der Addition äquivalenter sphärischer Leistung enthält.

**Claims**

1. Method for obtaining a pair of ophthalmic lenses for correcting cylindrical and spherical refractive defects of the two eyes of a wearer, including:

   - a step (E10) of defining the cylindrical and spherical correction requirements of the wearer for various vision proximities,
   - a step (E20) of determining cylindrical and spherical powers of said ophthalmic lenses at vision points of various proximities, depending on the previously defined cylindrical and spherical correction requirements of the wearer, and
   - a step (E30) of producing said ophthalmic lenses on the basis of the cylindrical and spherical powers determined;

   **characterized in that** the powers of at least one of the two ophthalmic lenses are determined (E20) so as to limit the discrepancy obtained, between the two ophthalmic lenses of the pair, in at least one of the following quantities:

   - the equivalent spherical power addition between the vision points of various proximities, and
   - the variation in the cylindrical power vector between the vision points of various proximities.

2. Obtaining method according to Claim 1, wherein the discrepancy obtained in one and/or the other of said quantities is smaller than a predefined threshold value.

3. Obtaining method according to Claim 2, wherein the discrepancy obtained between the two ophthalmic lenses of the pair in the equivalent spherical power addition between the vision points of various proximities is smaller than 0.25 dioptres.

4. Obtaining method according to one of Claims 1 and 2, wherein the powers of at least one of the two ophthalmic lenses are determined (E20) by applying the following rules:

   - one of the two ophthalmic lenses of the pair having a minimal variation in the cylindrical power vector, this minimal variation being lower than 0.15 dioptres, the variation in the cylindrical power vector of the other ophthalmic lens of the pair is lower than 0.3 dioptres, or
   - one of the two ophthalmic lenses of the pair having a minimal variation in the cylindrical power vector, this minimal variation being higher than or equal to 0.15 dioptres, the variation in the cylindrical power vector of the other ophthalmic lens of the pair is lower than twice this minimal variation in the cylindrical power vector.

5. Obtaining method according to one of Claims 1 to 4, wherein the discrepancy in the variation in the cylindrical power vector between the vision points of various proximities is obtained by modifying the amplitude and/or the angle of the cylindrical power vector of one of the two ophthalmic lenses of the pair at a near-vision point.

6. Obtaining method according to one of Claims 1 to 5, wherein the powers of at least one of the two lenses are also determined so as to limit the difference obtained, for the two ophthalmic lenses of the pair, between the equivalent spherical power addition and the addition requirement.

7. Obtaining method according to Claim 6, wherein the difference obtained between the equivalent spherical power addition and the addition requirement is smaller than 0.25 dioptres.

8. Obtaining method according to one of Claims 1 to 7, wherein the cylindrical and spherical powers of said at least one of the two ophthalmic lenses at vision points of various proximities are determined in increments of 0.125 dioptres.

9. Obtaining method according to one of Claims 1 to 8, wherein the determining step is carried out so that the cylindrical and spherical powers, at the vision points of the various proximities, of the ophthalmic lens intended to be placed in front of the dominant eye of the wearer correspond to the cylindrical and spherical correction requirements at said vision points of the wearer.

10. Obtaining method according to one of Claims 1 to 9, wherein said vision points of various proximities correspond to far-vision, intermediate-vision and/or near-vision points of the wearer.

11. Obtaining method according to one of Claims 1 to 10, wherein said vision points of various proximities correspond to far-vision and near-vision points of the wearer, and the cylindrical and spherical correction requirements of the wearer are defined on the basis of a measurement of the cylindrical and spherical refraction in far vision and in near vision of the two eyes of the wearer.

12. Obtaining method according to one of Claims 1 to 10, wherein said vision points of various proximities correspond to far-vision and near-vision points of the wearer, and the cylindrical and spherical correction requirements of the wearer are defined (E210) on the basis of a measurement of the cylindrical and spherical refraction in far vision of the two eyes of the wearer and of a measurement of the cylindrical and spherical refraction in near vision of at least one eye of the wearer.

13. Obtaining method according to Claim 12, wherein said measurement (E210) of the cylindrical and spherical refraction in near vision is performed on the dominant eye of the wearer.

14. Obtaining method according to one of Claims 1 to 13, wherein the step of defining the requirements comprises a substep of defining cylindrical correction requirements of the wearer for various vision proximities, which substep is carried out after a step of limiting the discrepancy obtained, between the two ophthalmic lenses of the pair, in the equivalent spherical power addition.

Fig.1

Fig.2

Fig.3

Fig.4

## RÉFÉRENCES CITÉES DANS LA DESCRIPTION

**Documents brevets cités dans la description**

- DE 102007062929
- EP 990939 A
- EP 930939 A
- WO 2011000845 A